# EUROPÄISCHE PATENTSCHRIFT

(11) **EP 2 597 179 B1**
(45) Veröffentlichungstag und Bekanntmachung des Hinweises auf die Patenterteilung: **08.01.2014**
(21) Anmeldenummer: 11190598.0
(22) Anmeldetag: 24.11.2011
(51) Int. Cl.: D01F 1/07, D01F 6/90, C08K 5/5313, C07F 9/6571

(54) **Flammhemmende Polymerfasern und deren Verwendung sowie diese Polymerfasern enthaltendes Textilgewebe**
Flame retardant polymer fibres, their use, and textiles containing said fibers
Fibres polymères ignifuges, leur utilisation, ainsi que tissus textiles contenant ces fibres polymères

(43) Veröffentlichungstag der Anmeldung: 29.05.2013
(73) Patentinhaber: EMS-Patent AG, 7013 Domat/Ems (CH)
(72) Erfinder: BENDER, Klaus, 7402 Bonaduz (CH); SCHÄCH, Gunther, 7000 Chur (CH)
(74) Vertreter: Pfenning, Meinig & Partner GbR

(56) Entgegenhaltungen:
- EP-A1- 1 612 244
- WO-A1-98/42900
- WO-A1-2009/109347
- DE-A1- 19 711 523
- US-A- 4 127 590

## Beschreibung

Die vorliegende Erfindung betrifft flammhemmende Polymerfasern (Stapelfasern und Filamente) aus einem Polymerblend aus Polyamid 6 und Polyamid 66 sowie mindestens einem halogenfreien Flammschutzmittel.

Flammhemmende Polymerzusammensetzungen, z.B. auf der Basis von Polyamiden, werden aufgrund ihres ausgezeichneten Eigenschaftsprofils zur Herstellung von Formkörpern in einer Vielzahl von Anwendungsgebieten verwendet. Insbesondere für Bauteile in der Elektro-und in der Elektronikindustrie ist es dabei wesentlich, dass die Polymerzusammensetzung ausgezeichnete flammhemmende Eigenschaften aufweist, um so einen ausreichenden Brandschutz zu gewährleisten. Neben diesen ausgezeichneten Brandschutzeigenschaften ist es dabei aber wichtig, dass auch die weiteren physikalischen Eigenschaften, wie z. B. Zug-E-Modul, Reißfestigkeit und Reißdehnung, für die jeweiligen Anwendungsfälle die vorgegebenen Anforderungen erfüllen.

Für die Herstellung flammhemmender Polyamide sind bereits seit langem eine ganze Reihe nicht-reaktiver Flammschutzmittel in der technischen Anwendung. Diese beruhen jedoch meist auf halogen- oder antimonhaltigen Substanzen, die aufgrund ihres ökotoxikologischen bzw. genotoxikologischen Potentials unerwünscht sind. Aus diesem Grund werden mittlerweile bevorzugt halogenfreie Flammschutzmittel eingesetzt.

Aus der WO 2009/109347 A1 sind halogenfreie Flammschutzmittel bekannt, die auf phosphorhaltigen Monomeren basieren und für thermoplastische Polymerzusammensetzungen Anwendung finden. Das hier eingesetzte Flammschutzmittel besitzt ein mittleres Molekulargewicht von über 20.000 und wird vorzugsweise zur Herstellung von Polyamidfasern und Polyesterfasern im Schnellspinnverfahren eingesetzt.

Die WO 2011/000457 A1 beschreibt flammgeschützte Polymerzusammensetzungen aus einem Polyamid oder einem Polybutylenterephthalat, die eine ausgewählte Phosphorverbindung als Flammschutzmittel enthalten. Ebenso werden hieraus gebildete Formteile für elektrische oder elektronische Geräte beschrieben.

Weiterhin beschreibt die WO 2010/019746 A2 flammgeschützte Polymer-Verbundsysteme. Als Flammschutzmittel werden hier Organoclays in Kombination mit anorganischen Flammschutzmitteln wie z.B. Kaliumbromid eingesetzt. Als Polymersysteme werden hier Polyamide, Polyester, Polymilchsäure (PLA), Polypropylen und Acrylpolymere genannt. Einsatz finden die Polymer-Verbundsysteme in Form von flammgeschützten Fasern oder flammgeschützten Teppichen.

All die im Stand der Technik beschriebenen flammgeschützten Systeme haben jedoch gemein, dass hier oft deutliche Einbußen hinsichtlich der weiteren physikalischen Eigenschaften, z.B. Festigkeit, Dehnung oder Abrasionsbeständigkeit, hinzunehmen sind. Dies führt zu einer deutlichen Reduzierung der Einsatzbreite derartiger Polymere, da die zuletzt genannten Eigenschaften in den Anwendungsgebieten unverzichtbar sind.

Es war daher Aufgabe der vorliegenden Erfindung flammhemmende Polymerfasern bereitzustellen, die neben den Flammschutzeigenschaften auch in Bezug auf Festigkeit, Dehnung und Abrasionsbeständigkeit verbesserte Eigenschaften aufweisen.

Diese Aufgabe wird durch die flammhemmende Polymerfaser mit den Merkmalen des Anspruchs 1 sowie das textile Gewebe mit den Merkmalen des Anspruchs 14 gelöst. Die weiteren abhängigen Ansprüche zeigen vorteilhafte Weiterbildungen auf. Im Anspruch 16 sind erfindungsgemäße Verwendungen angegeben.

Erfindungsgemäß wird eine flammhemmende Polymerfaser aus einem Polymerblend aus Polyamid 6 und Polyamid 66 mit einer die folgenden Komponenten umfassenden Zusammensetzung bereitgestellt:
I) 60 bis 90 Gew.-% Polyamid 66,
II) 6 bis 28 Gew.-% Polyamid 6,
III) 4 bis 12 Gew.-% mindestens eines halogenfreien Flammschutzmittels aus einem Polykondensat von
   a) mindestens einem phosphorhaltigen Monomer, das ausgewählt ist aus Addukten von
      a1) 9,10-Dihydro-9-oxa-10-phosphaphenanthren-10-oxid (DOPO) und/oder kernsubstituierten DOPO-Derivaten an
      a2) ungesättigte Verbindungen aus der Gruppe der ein- und mehrwertigen Carbonsäuren und deren Anhydriden und
   b) mindestens einem esterbildenden Monomer ausgewählt aus der Gruppe der ein- oder mehrwertigen Alkohole und deren Mischungen.,

In einer bevorzugten Ausführungsform umfasst die erfindungsgemäße Polymerfaser folgende Zusammensetzung:
I) 75 bis 86 Gew.-%, insbesondere 80 bis 85 Gew.-% Polyamid 66,
II) 7 bis 15 Gew.-%, insbesondere 7.5 bis 11 Gew.-% Polyamid 6,
III) 7 bis 10 Gew.-%, insbesondere 7.5 bis 9 Gew.-% mindestens eines halogenfreien Flammschutzmittels des Polykondensats.

Bevorzugte ungesättigte Mono- oder Dicarbonsäuren zur Umsetzung mit DOPO sind Sorbinsäure, Acrylsäure, Crotonsäure, Maleinsäure, Fumarsäure, Endomethylentetrahydrophtalsäure, Mesaconsäure, Tetrahydrophtalsäure und Itaconsäure sowie deren Anhydride. Besonders bevorzugt sind Itaconsäure, Maleinsäure und deren Anhydride. Am meisten bevorzugt ist Itaconsäure.

Als esterbildende Monomere zur Bildung des erfindungsgemäßen Flammschutzmittels werden bevorzugt gesättigte ein- und mehrwertige Alkohole eingesetzt. Besonders bevorzugte esterbildene Monomere sind aliphatische zweiwertige Alkohole wie z.B. Monoethylenglykol, Diethylenglykol, Propylenglykol, 1,3-Propandiol, 1,3-Butandiol, Neopentylglykol, Hexandiol und 1,10-Decandiol. Bevorzugte mehrwertige Alkohole sind Tris-2-hydroxyethylisocyanurat (THEIC), Glycerin, Trimethylolethan, Trimethylolpropan und Pentaerythrit sowie Zuckeralkohole wie Mannit. Ein besonders bevorzugter Alkohol ist Diethylenglykol.

Bevorzugt handelt es sich um einen Polyester mit 5 bis 9 Gew.-% Phosphor und besonders bevorzugt um einen Polyester mit 7.5 bis 8.5 Gew.-% Phosphor.

Überraschenderweise wurde gefunden, dass ein Polymerblend aus Polyamid 6 und Polyamid 66, mit Polyamid 66 als Hauptkomponente, zusammen mit dem erfindungsgemäßen halogenfreien Flammschutzmittel den Flammtest nach FAR 25.853 (Appendix F, Part 1, 12 Seconds erhältlich von der Federal Aviation Association) besteht und darüber hinaus je nach Zusammensetzung des Blends sogar bessere textil-mechanische Eigenschaften als eine reine Polyamid 66-Faser aufweist. Als Indikator für die textil-mechanischen Eigenschaften dient das Produkt aus der Festigkeit in cN/dtex, der Quadratwurzel der Dehnung in Prozent und dem dekadischen Logarithmus (log) der Zyklenzahl bis zum Faserabriss im Drahtscheuertest, durch welche die Abrasion quantifiziert wird. Dies ist deswegen überraschend da generell PA 6 bessere textil-mechanische Eigenschaften als PA 66 aufweist, wobei der Zusatz eines halogenfreien Flammschutzmittels die textil-mechanischen Eigenschaften, noch drastisch verschlechtert. Auf Grund der sehr nachteiligen Flammeigenschaften von PA6 ist die Verwendung von PA66 als Hauptkomponente zwingend.

Neben den sehr guten textil-mechanischen Eigenschaften weisen die erfindungsgemäßen Fasern als weitere positive Eigenschaft eine Beständigkeit gegen das Auswaschen des Flammschutzmittels auf.

In einer bevorzugten Ausführungsform enthält die erfindungsgemässe Polymerfaser mindestens ein Additiv. Bezogen auf die Gesamtmenge an PA6, PA66 und dem erfindungsgemässen Flammschutzmittel sind diese Additive in 0.001 bis 5 Gew.-%, bevorzugt in 0.01 bis 4 Gew.-%, insbesondere bevorzugt in 0.1 bis 2 Gew.-%, besonders bevorzugt in 0.1 bis 1 Gew.-% und am bevorzugtesten in 0.1 bis 0.5 Gew.-% zugesetzt.

In einer weiteren bevorzugten Ausführungsform weist die erfindungsgemäße Polymerfaser folgende Zusammensetzung auf:
IV) 75 bis 85.99 Gew.-%, insbesondere 80 bis 84.9 Gew.-% Polyamid 66,
V) 7 bis 11 Gew.-%, insbesondere 7.5 bis 9 Gew.-% Polyamid 6,
VI) 7 bis 10 Gew.-%, insbesondere 7.5 bis 9 Gew.-% mindestens eines halogenfreien Flammschutzmittels des Polykondensats
VII) 0.01 bis 4 Gew.-%, insbesondere 0.1 bis 2 Gew.-% des mindestens einen Additivs.

Im Sinne der Erfindung wird das mindestens eine Additiv nur in Mengen zugesetzt, die es erlauben, dass für die Polymerfaser textil-mechanische Eigenschaften von grösser als 100 cN/dtex erhalten werden.

Vorzugsweise wird das mindestens eine Additiv in Mengen zugesetzt, die es erlauben, dass die Polymerfasern die Flammtestvoraussetzungen nach FAR 25.853 erfüllen.

Es ist weiter bevorzugt, dass das mindestens eine Additiv in einer Menge zugesetzt werden, dass die Polymerfaser eine Qualitätszahl im Bereich von 28 bis 50 aufweist.

Das mindestens eine Additiv ist vorzugsweise ein weiteres Flammschutzmittel und dabei besonders bevorzugt ausgewählt aus der Gruppe stickstoffhaltiger Verbindungen, stickstoff- und phosphorhaltiger Verbindungen und Mischungen hiervon.

Das mindestens eine Additiv kann weiterhin bevorzugt ausgewählt sein aus anorganischen Stabilisatoren, organischen Stabilisatoren, Farb- und Markierungsstoffen, anorganischen Pigmenten, organischen Pigmenten, Mattierungsmitteln, IR-Absorbern, Hitzestabilisatoren, Antistatika, Antiblockmitteln, Nukleierungsmitteln, Kristallisationsbeschleunigern, Kristallisationsverzögerern, kettenverlängernden Additiven, Leitfähigkeitsadditiven, Russ, Graphit, Kohlenstoffnanoröhrchen, optischen Aufhellern, photochromen Additiven, Vernetzungsmitteln, Intumeszenzmitteln, Fremdpolymeren und/oder Mischungen davon.

Als Additiv werden bevorzugt Mattierungsmittel zugesetzt. Besonders bevorzugtes Mattierungsmittel ist dabei Titandioxid.

In einer bevorzugten Ausführungsform sind keine Schichtsilikate enthalten.

Die Polymerfaser weist vorzugsweise textil-mechanische Eigenschaften (bestimmt anhand des Produkts aus der Festigkeit in cN/dtex, der Quadratwurzel der Dehnung in % und dem dekadischen Logarithmus der Zahl der Zyklen bis zum Faserabriss im Drahtscheuertest) von grösser als 100 cN/dtex, bevorzugt von grösser als 110 cN/dtex, insbesondere bevorzugt von grösser als 120 cN/dtex, noch mehr bevorzugt von grösser als 140 cN/dtex und am meisten bevorzugt von grösser als 160 cN/dtex auf.

Die Polymerfaser weist vorzugsweise eine Abrasionsbeständigkeit im Drahtscheuertest von 10000 bis 50000 Zyklen, insbesondere bevorzugt von 11000 bis 50000 Zyklen und noch mehr bevorzugt von 12500 bis 50000 Zyklen bis zum Faserbruch auf.

Die Polymerfaser weist vorzugsweise eine Festigkeit in [cN/dtex]von 3.5 bis 6.0, insbesondere bevorzugt 4.0 bis 5.8 und noch mehr bevorzugt von 4.2 bis 5.5auf.

Die Polymerfaser weist vorzugsweise eine Dehnung von 30 bis 120 %, insbesondere bevorzugt von 40 bis 110 % und besonders bevorzugt von 60 bis 105 % auf.

Die Polymerfaser weist vorzugsweise textil-mechanische Eigenschaften von grösser als 100 cN/dtex auf, wobei die Abrasionsbeständigkeit im Drahtscheuertest grösser als 10000 ist.

Die Polymerfaser weist vorzugsweise textil-mechanische Eigenschaften von grösser als 100 cN/dtex auf, wobei die Festigkeit grösser als 4.0 cN/dtex ist.

Die Polymerfaser weist vorzugsweise textil-mechanische Eigenschaften von grösser als 100 cN/dtex auf, wobei die Dehnung grösser als 60 % ist.

Die Polymerfaser weist vorzugsweise eine Qualitätszahl von 28 bis 50, bevorzugt von 30 bis 45 und besonders bevorzugt von 34 bis 45 auf.

Vorzugsweise weist die Polymerfaser eine erhöhte Extraktionsbeständigkeit auf, die anhand der Extraktion von 5 g der Polymerfaser in 150 ml deionisiertem Wasser über drei Stunden bei 98°C gemessen wird, wobei der Phosphorgehalt vor und nach der Extraktion um weniger als 2.5 %, vorzugsweise um weniger als 1.5 % differiert.

Erfindungsgemäß wird ebenso ein textiles Gewebe enthaltend flammhemmende Polymerfasern, wie sie zuvor beschrieben wurden, bereitgestellt.

Die flammhemmenden Polymerfasern werden für die Herstellung von textilen Geweben für den Einsatz in mobilen Verkehrsmitteln, insbesondere in Flugzeugen, Zügen und Kraftfahrzeugen verwendet. In diesen mobilen Verkehrsmittel finden sie bevorzugt Anwendung als Sitzbezüge, Teppiche oder Vorhänge. Des Weiteren finden Sie Verwendung in Vorhängen, Gardinen und Sitzbezügen in öffentlichen Gebäuden wie Kinos, Theatern und Restaurants sowie für Bekleidungs- und Schutzstoffe, für textile Bodenbespannungen, Sitzpolster und Möbelbezugsstoffe.

Anhand der nachfolgenden Beispiele soll der erfindungsgemäße Gegenstand näher erläutert werden, ohne diesen durch die hier gezeigten spezifischen Ausführungsformen einschränken zu wollen.

### Beispiele

Im Folgenden werden Polymerfasern, wie sie aus dem Stand der Technik bekannt sind sowie erfindungsgemäße Polymerfasern, im Hinblick auf ihre Herstellung und ihre Eigenschaften näher beschrieben.

Für die Herstellung wurden folgende Ausgangsmaterialien eingesetzt:
- PA66 (Radici Radipol A45, BASF Ultramid A 3401)
- PA 6 (EMS Grilon A26)
- Flammschutz: Ukanol FR 80 (Schill + Seilacher)
- Flammschutz: Cloisite 20A (Rockwood Additives Ltd.)
- Flammschutz: FR-Masterbatch CF-50B937 (IQAP Masterbatch Group S.L.)

Für folgende Komponenten erfolgte eine Trocknung bzw. Konditionierung:
- PA66 und PA6 wurden auf die für die Ausspinnung geeignete Feuchte konditioniert (PA66 Radici Radipol A45: H₂O: 0.07 Gew.-%, RV = 1.85, PA6 EMS Grilon A26: H₂O: 0.04 Gew.-%, RV = 1.77, PA66 BASF Ultramid A 3401: H₂O: 0.04 Gew.-%, RV = 2.06, RV in allen Fällen gemessen nach DIN51562-1 (0.5 % PA in m-Kresol; Probenvorbereitung: 90 Minuten bei 95 °C gerührt, dann auf 20 °C abgekühlt und bei dieser Temperatur gemessen)).
- Ukanol FR 80 wurde im Vakuum-Taumeltrockner auf 0.2% Feuchte 24h bei 55°C PT und bei 1 mbar Vakuum [H₂O: 0.271 Gew.-%, RV = 1.202, gemessen nach DIN51562-1 (1 % Ukanol FR80 in m-Kresol; Probenvorbereitung: 90 Minuten bei 95°C gerührt, dann auf 20 °C abgekühlt und bei dieser Temperatur gemessen)] getrocknet.

Als Rohstoffmischungen wurden erstens ein Masterbatch aus z.B. PA66(Radipol A45)/PA6 (Grilon A26) /Ukanol FR80 hergestellt, wobei die Masterbatchherstellung mit einem Zweischneckenextruder erfolgte, z.B. 43/32/25 (Verhältnis der Komponenten PA66/PA6/FR80) für 8% Endkonzentration an FR80. Eine zweite Variante sah vor, dass die Rohstoffmischung direkt dem Spinnextruder zugeführt wurde.

Die Extrusion und das Spinnen erfolgte in der Weise, dass das Aufschmelzen der Rohstoffmischung mit einem Spinnextruder durch Verteilen zur Spinnpumpe oder den Spinnpumpen über Schmelzeverteilerleitungen bei mehrstelligen Spinnbalken erfolgte. Die Schmelzetemperatur betrug 260-300°C.

Das Dosieren der Schmelzemenge erfolgte durch Zuführen in das Spinnpaket mit anschließendem Verteilen der Polymerschmelze im Spinnpaket auf die einzelnen Düsenlöcher und Extrusion bei 260-300°C durch feine Kapillaren in den Spinnschacht unterhalb der Spinndüse. Die Düsenlochgeometrie richtet sich dabei nach dem Spinntiter (0.25-0.8 mm, L/D=2).

Das Abkühlen der Polymerschmelze erfolgte, indem im Spinnschacht die Filamente von der Extrusionsgeschwindigkeit (5-15 m/min) auf die Abzugsgeschwindigkeit (400-1500 m/min) beschleunigt und durch die Anblasluft (5-20 kg Luft/kg PA, 20-30°C) abgekühlt wurden.

Vor dem Kontakt mit den Abzugsgaletten werden die Filamente mit 0.1 bis 0.4 Gew.-% einer handelsüblichen Spinnavivage präpariert. Die Avivage wird auf den Streckprozesses und die Weiterverarbeitung der Fasern optimiert. Dazu werden Antistatika und Gleitmittel (z.B. Phosphorsäureester mit ethoxylierten Alkoholen, neutralisierten Phosphorsäureestern und Fettsäurepolyglykolestern) verwendet. Die Avivage ist lediglich ein Verarbeitungshilfsmittel und nicht als Additiv im Sinne der Erfindung anzusehen.

Im Anschluss erfolgte das Verstrecken nach zwei Prozessen. Während im Einstufen-Prozess direkt ab Abzugsgaletten auf den Streckgaletten mit Streckfaktor 2-4 verstreckt wurde, erfolgte im Zweistufenprozess die Ablage vom Abzugswerk in Kannen. Eine Vielzahl von Kannen wurde einer Streckstrasse vorgelegt und bei 100-300 m/min wurde das Filamentbündel 2-5 fach verstreckt.

Die Fixierung der Fasern erfolgte, indem die Filamente beim und nach dem Verstreckprozess unter Spannung (T: 80-200°C) und nach dem Streckprozess ohne Spannung (130 °C-180 °C) wärmebehandelt wurden.

Die Filamente wurden texturiert und aufgespult. Um Stapelfasern herzustellen wurden die Filamente gekräuselt oder texturiert und anschließend noch geschnitten (30-140 mm). Die Schnittlänge richtete sich nach den Anforderungen der Weiterverarbeitung in der Sekundärspinnerei.

Die experimentellen Daten, welche die positiven Eigenschaften der beschriebenen Blends belegen, sind in den Tabellen 1 und 2 zusammengefasst. Die Abrasionsbeständigkeit (DST = Drahtscheuertouren) der Fasern aus Tabelle 1 und 2 wurde nach unterschiedlichen, vom Titer der Faser abhängigen, Testmethoden bestimmt.

In Tabelle 1 sind zunächst Fasern mit einem Titer von circa 11 dtex charakterisiert, wobei hier das erfindungsgemäße Flammschutzmittel Ukanol FR80 eingesetzt wurde.

Vor der Bestimmung der textil-mechanischen Eigenschaften wurden die Polymerfasern zunächst für 3 Stunden bei 21 °C und 60 % relativer Luftfeuchtigkeit konditioniert.

Vor der Bestimmung der relativen Viskosität wurden die Polymerfasern entaviviert und für 2 h bei 90 °C im Vakuumtrockenschrank konditioniert.

Es wurden die folgenden Messmethoden verwendet:

Drahtscheuertest: Die Faser wird mit einem Vorspanngewicht (0.5 g/dtex) belastet und mit 90° Umschlingung über einen Wolframdraht von 100 µm Durchmesser gelegt. Die Fasern (26 Fasern je Messung) werden mit einer Hublänge von 5 mm und einer Frequenz von 120 Zyklen/min über den Wolframdraht gescheuert (Kombination aus Knick- und Scheuerbelastung). Gemessen wird die Anzahl der Zyklen bis zum Faserbruch. Nach Streichung des höchsten und tiefsten Werts wird der Mittelwert gebildet.

Relative Viskosität: Gemäss DIN 51562-1 werden 0.5 g der Polymerfaser in 100 ml m-Kresol gelöst und 90 Minuten bei 95 °C gerührt, dann wird auf 20°C abgekühlt und bei dieser Temperatur gemessen.

Titer: Der Titer wird gemäss ISO 1973 auf einem

Vibroskop 400 / Vibrodyn 400 der Firma Lenzing bestimmt. Es wird nach dem Vibroskop-Verfahren gearbeitet. Die Messungen werden an 25 Einzelfasern aus einer homogenen Mischprobe durchgeführt. Die mittlere Feinheit wird auf 2 signifikante Stellen angegeben.

Festigkeit/Dehnung: Die Festigkeit und die Dehnung werden auf einem Vibroskop 400 / Vibrodyn 400 der Firma Lenzing gemäss ISO 5079 bestimmt. Die Einspannlänge beträgt 25 mm und die Messungen werden an 25 Fasern aus einer homogenen Mischprobe durchgeführt. Das Vorspanngewicht und die Geschwindigkeit werden titerabhängig gewählt (Faser mit circa 3 dtex: Vorspanngewicht 200 mg, Geschwindigkeit 25 mm/min; Faser mit circa 11 dtex: Vorspanngewicht von 600 mg, Geschwindigkeit 25 mm/min) .

Flammtest: Der Flammtest wurde nach FAR 25.853, Appendix F, Part 1, 12 Seconds erhältlich von der Federal Aviation Association durchgeführt. Beispiele und Vergleichsbeispiele die den Test erfüllten wurden in den Tabellen mit (+) und Beispiele oder Vergleichsbeispiele die den Test nicht erfüllten mit (-) gekennzeichnet. Getestet wurden Vliesstoffe mit 500 bis 600 g/m².

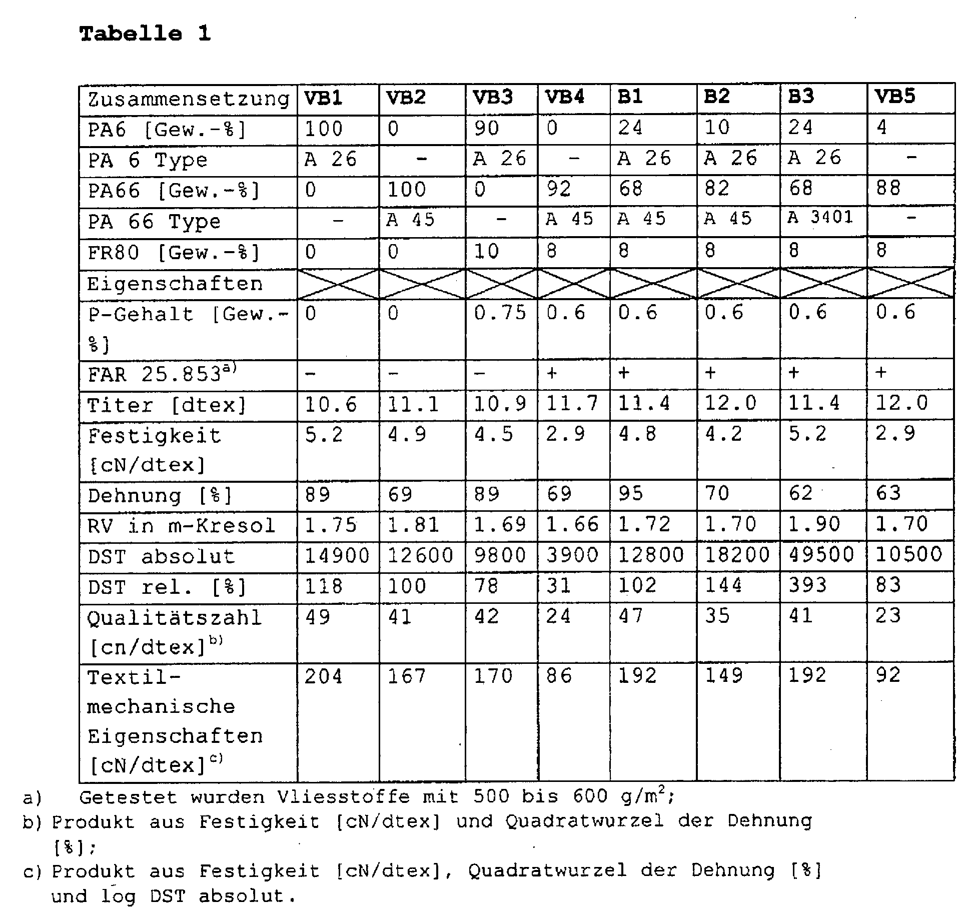

Die Vergleichsbeispiele wurden so ausgewählt, dass ein reines PA6-System (VB 1), ein reines PA66-System (VB 2), ein flammgeschütztes PA6-System (VB 3), ein flammgeschütztes PA66-System (VB 4) und ein Blend mit geringem PA6-Anteil (VB5) untersucht wurden. Gleichzeitig wurden erfindungsgemäße Beispiele B1 bis B3 untersucht, die sowohl PA6, PA66 und das Flammschutzmittel Ukanol FR80 enthielten.

Dementsprechend wiesen nur die erfindungsgemäßen Beispiele B1 bis B3 und die Vergleichsbeispiele (VB 4 und VB5) flammhemmende Eigenschaften auf, die die Flammtestvoraussetzung nach FAR 25.853 erfüllen. Der Vergleich von B1 mit B3 macht deutlich, dass die Viskosität keinen Einfluss auf die textil-mechanischen Eigenschaften und die flammhemmenden Eigenschaften nimmt.

Es zeigte sich, dass PA6 (VB 1) deutlich bessere textil-mechanische Eigenschaften als PA66 (VB 2) aufweist. Der Zusatz des Flammschutzmittels Ukanol FR80 führt zu einer weiteren drastischen Verschlechterung der textil-mechanischen Eigenschaften. Dies wird besonders anhand des Vergleichs von reinem PA66 (VB 2) gegenüber dem flammgeschützten PA66 (VB 4) deutlich. Im Vergleich zum flammgeschützten System ohne PA6 (VB4) zeigen die erfindungsgemäßen Beispiele B1 bis B3 deutlich verbesserte textil-mechanische Eigenschaften.

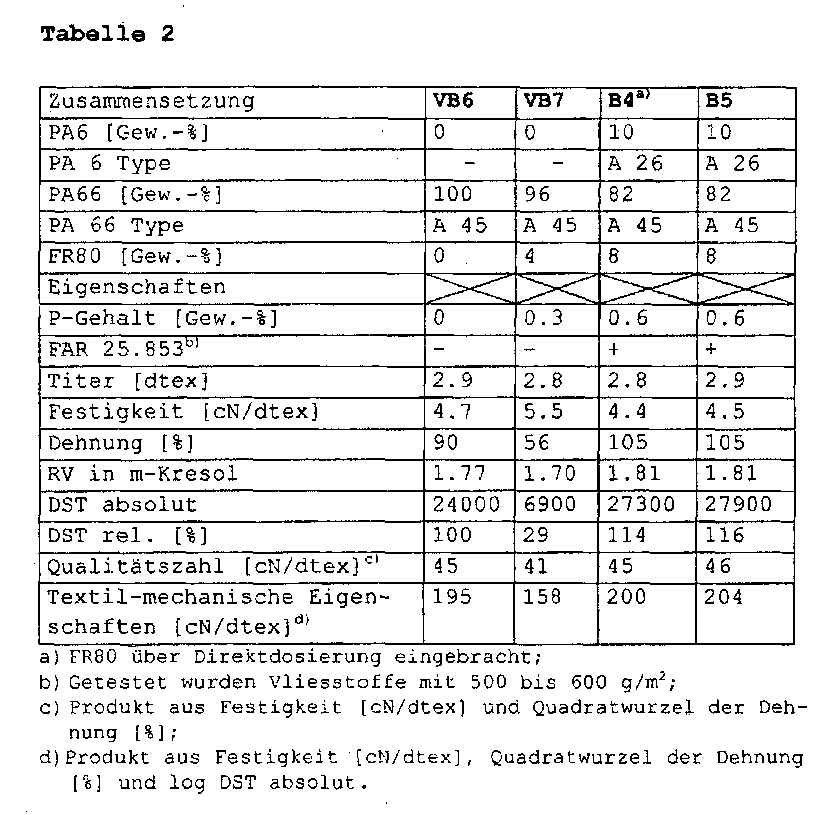

In Tabelle 2 wurde ein PA66-System (VB 6) und flammgeschütztes PA66-System (VB 7) mit den erfindungsgemäßen Zusammensetzungen B4 und B5 verglichen.

Auch für die hier verwendeten Fasern mit kleinerem Titer zeigt sich im Hinblick auf die textil-mechanischen Eigenschaften, dass der erfindungsgemäße Zusatz von PA6 zu dem flammgeschützten Polymersystem zu einer drastischen Verbesserung der textil-mechanischen Eigenschaften führt.

In Tabelle 3 sind Fasern mit einem Titer von circa 11 dtex charakterisiert, wobei hier als Flammschutzmittel Organoclay und/oder ein weiteres Flammschutzmittel (IQAP-FR) eingesetzt wurde.

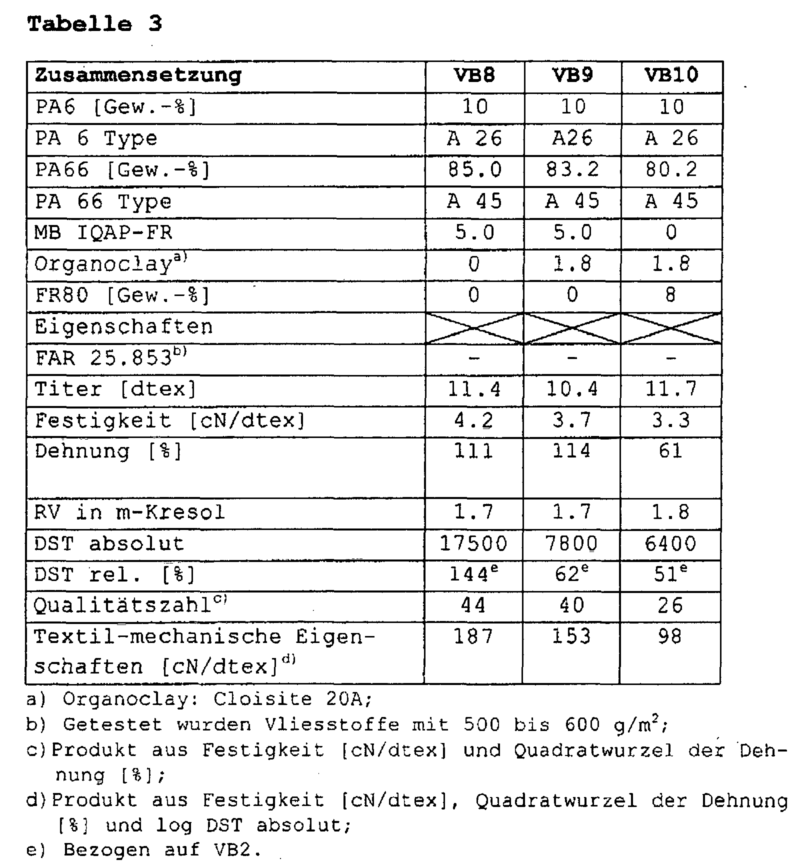

Es sind weiterhin flammgeschützte Polymersysteme untersucht worden, bei denen ein anderes Flammschutzmittel eingesetzt wurde (Tabelle 3). Als Flammschutzmittel wurde hier Organoclay und ein Flammschutzmittel mit der Bezeichnung IQAP-FR sowie Organoclay und das erfindungsgemäße Ukanol FR80 eingesetzt.

Der Tabelle ist zu entnehmen, dass das Zumischen eines Organoclays als Flammschutzmittel die textil-mechanischen Eigenschaften verschlechtert, dies geht aus dem Vergleich von VB8 mit VB9 hervor. Ausserdem bestehen weder die Kombination aus IQAP und Organoclay noch die Kombination aus Ukanol FR80 und Organoclay (VB10) den Brenntest nach FAR 25.853. Bei Verwendung von nur 1.8 % des Organoclays und 8 % des erfindungsgemäßen Flammschutzmittels (VB10) sinken die textil-mechanischen Eigenschaften auf <100 cN/dtex. Das Zumischen eines Organoclays, welches aus dem Stand der Technik für anorganische Flammschutzmittel bekannt ist, führt im Falle der erfindungsgemäßen Flammschutzmittel zu negativen Eigenschaften. Aus diesen Vergleichsuntersuchungen lässt sich die Schlussfolgerung ziehen, dass nur mit dem erfindungsgemäß eingesetzten Flammschutzmittel Ukanol FR80 durch Zublendung von PA6 zu PA 66 der Flammtest nach FAR 25.583 bestanden wird sowie bessere textil-mechanische Eigenschaften als für PA 66 erhalten werden. Werden hingegen IQAP-FR bzw. die Kombination IQAP-FR oder FR 80 mit Organoclay als Flammschutzmittel eingesetzt, resultieren hier schlechtere Werte als für die PA66-Faser ohne Additive.

Des Weiteren verfügen die erfindungsgemäßen Fasern, wie in Tabelle 4 gezeigt, über eine sehr gute Auswaschbeständigkeit. 5 g der Polymerfaser gemäss der Zusammensetzung aus Beispiel 2 wurden in 150 ml deionisiertem Wasser extrahiert. Dazu wurde die Faser zunächst in ein 23°C warmes, temperierbares (Labomat) Wasserbad gegeben und mit einer Aufheizrate von 1.5 °C pro Minute auf 98 °C erwärmt. Bei dieser Temperatur wurde die Extraktion für 3 Stunden fortgesetzt. Nach der Extraktion wurde die Polymerfaser geschleudert und bei 23 °C getrocknet. Der Phosphorgehalt wurde vor und nach der Extraktion mittels ICP = ion coupled plasma (Aufschluss der Probe mit Salpetersäure und Messung auf einem Varian 720-ES) bestimmt. Der nach der Extraktion bestimmte Phosphorgehalt lag nur um 1 % tiefer als der Phosphorgehalt vor der Extraktion.

**Tabelle 4**

| | P-Gehalt [ppm] |
|---|---|
| Vor der Extraktion | 5953 |
| Nach der Extraktion | 5891 |
| Differenz | 62 |

## Patentansprüche

1. Flammhemmende Polymerfaser aus einem Polymerblend aus Polyamid 6 und Polyamid 66 mit einer Zusammensetzung umfassend:
I) 60 bis 90 Gew.-% Polyamid 66,
II) 6 bis 28 Gew.-% Polyamid 6,
III) 4 bis 12 Gew.-% mindestens eines halogenfreien Flammschutzmittels aus einem Polykondensat von
a) mindestens einem phosphorhaltigen Monomer ausgewählt aus Addukten von
a1) 9,10-Dihydro-9-oxa-10-phosphaphenanthren-10-oxid (DOPO) und/oder kernsubstituierten DOPO-Derivaten an
a2) ungesättigte Verbindungen aus der Gruppe der ein- und mehrwertigen Carbonsäuren und deren Anhydriden und
b) mindestens einem esterbildenden Monomer ausgewählt aus der Gruppe der ein- oder mehrwertigen Alkohole und deren Mischungen.

2. Flammhemmende Polymerfaser nach Anspruch 1, **dadurch gekennzeichnet, dass** die Zusammensetzung der Polymerfaser mindestens ein Additiv beinhaltet.

3. Flammhemmende Polymerfaser nach einem der vorhergehenden Ansprüche mit folgender Zusammensetzung:
I) 75 bis 85.99 Gew.-%, insbesondere 80 bis 84.9 Gew.-% Polyamid 66,
II) 7 bis 11 Gew.-%, insbesondere 7.5 bis 9 Gew.-% Polyamid 6,
III) 7 bis 10 Gew.-%, insbesondere 7.5 bis 9 Gew.-% mindestens eines halogenfreien Flammschutzmittels des Polykondensats
IV) 0.01 bis 4 Gew.-%, insbesondere 0.1 bis 2 Gew.-% des mindestens einen Additivs.

4. Flammhemmende Polymerfaser nach einem der vorhergehenden Ansprüche, **dadurch gekennzeichnet, dass** die Zusammensetzung der Polymerfaser bezogen auf die Gesamtmenge an PA66 I), PA6 II) und Flammschutzmittel III) 0.001 bis 5 Gew-% , bevorzugt 0.01 bis 4 Gew.-%, insbesondere bevorzugt 0.1 bis 2 Gew.-% und am meisten bevorzugt 0.1 bis 1 Gew.-% des mindestens einen Additivs beinhaltet.

5. Flammhemmende Polymerfaser nach einem der vorhergehenden Ansprüche, **dadurch gekennzeichnet, dass** das Produkt aus der Festigkeit in cN/dtex, der Quadratwurzel der Dehnung in % und dem dekadischen Logarithmus der Zahl der Zyklen bis zum Faserabriss im Drahtscheuertest grösser als 100 cN/dtex, bevorzugt grösser als 110 cN/dtex, insbesondere bevorzugt von grösser als 120 cN/dtex, noch mehr bevorzugt von grösser als 140 cN/dtex und am meisten bevorzugt grösser als 160 cN/dtex ist.

6. Flammhemmende Polymerfaser nach einem der vorhergehenden Ansprüche,
**dadurch gekennzeichnet, dass** die Polymerfaser eine Abrasionsbeständigkeit im Drahtscheuertest von 10000 bis 50000 Zyklen, bevorzugt von 11000 bis 50000 und besonders bevorzugt von 12500 bis 50000 bis zum Faserbruch zeigt.

7. Flammhemmende Polymerfaser nach einem der vorhergehenden Ansprüche,
**dadurch gekennzeichnet, dass** die Polymerfaser eine Qualitätszahl von 28 bis 50, bevorzugt von 30 bis 45 und besonders bevorzugt von 34 bis 45 aufweist.

8. Flammhemmende Polymerfaser nach einem der vorhergehenden Ansprüche,
**dadurch gekennzeichnet, dass** die Polymerfaser eine Festigkeit in [cN/dtex] von 3.5 bis 6.0, bevorzugt von 4.0 bis 5.8 und besonders bevorzugt von 4.2 bis 5.5 aufweist.

9. Flammhemmende Polymerfaser nach einem der vorhergehenden Ansprüche,
**dadurch gekennzeichnet, dass** die Polymerfaser eine Dehnung von 20 bis 120, bevorzugt von 40 bis 110 und besonders bevorzugt von 60 bis 105 aufweist.

10. Flammhemmende Polymerfaser nach einem der vorhergehenden Ansprüche,
**dadurch gekennzeichnet, dass** die Fasern die Flammtestvoraussetzungen nach FAR 25.853 erfüllen.

11. Flammhemmende Polymerfaser nach einem der vorhergehenden Ansprüche,
**dadurch gekennzeichnet, dass** die Polymerfaser eine erhöhte Extraktionsbeständigkeit zeigt, gemessen anhand der Extraktion von 5 g der Polymerfaser in 150 ml deionisiertem Wasser, wobei die Faser in ein 23 °C warmes, temperierbares (Labomat) Wasserbad gegeben, mit einer Aufheizrate von 1.5 °C pro Minute auf 98 °C erwärmt und bei dieser Temperatur für 3 Stunden extrahiert wird und der Phosphorgehalt vor und nach der Extraktion um weniger als 2.5 % differiert.

12. Flammhemmende Polymerfaser nach einem der vorhergehenden Ansprüche,
**dadurch gekennzeichnet, dass** das mindestens eine Additiv in einer Menge enthalten sind, dass die Polymerfaser mindestens eine der folgenden Eigenschaften aufweist:
- die Polymerfaser erfüllt die Flammtestvoraussetzung nach FAR 25.853
- die Polymerfaser besitzt eine Qualitätszahl im Bereich von 28 bis 50.

13. Flammhemmende Polymerfaser nach einem der vorhergehenden Ansprüche,
**dadurch gekennzeichnet, dass** das mindestens eine Additiv
• ein weiteres Flammschutzmittel ausgewählt aus der Gruppe stickstoffhaltiger Verbindungen, stickstoff- und phosphorhaltiger Verbindungen und Mischungen hiervon, und/oder
• ausgewählt ist aus der Gruppe bestehend aus anorganischen Stabilisatoren, organischen Stabilisatoren, Farb- und Markierungsstoffen, anorganischen Pigmenten, organischen Pigmenten, IR-Absorbern, Hitzestabilisatoren, Antistatika, Antiblockmitteln, Nukleierungsmitteln, Kristallisationsbeschleunigern, Kristallisationsverzögerern, Mattierungsmitteln, insbesondere Titandioxid als Mattierungsmittel, kettenverlängernden Additiven, Leitfähigkeitsadditiven, Russ, Graphit, Kohlenstoffnanoröhrchen, optischen Aufhellern, photochromen Additiven, Vernetzungsmitteln, Intumniszenzmitteln, Fremdpolymeren und/oder Mischungen davon.

14. Textiles Gewebe enthaltend flammhemmende Polymerfasern nach einem der vorhergehenden Ansprüche.

15. Textiles Gewebe nach Anspruch 14,
**dadurch gekennzeichnet, dass** das Gewebe ein Teppich, Sitzbezug für ein mobiles Verkehrsmittel, insbesondere Flugzeuge, Züge, Kraftfahrzeuge, oder ein Vorhang, ein Sitzbezug oder eine Gardine in öffentlichen Gebäuden, oder ein Bekleidungs- oder Schutzstoff in textilen Bodenbespannungen, Sitzpolstern oder Möbelbezugsstoffen ist.

16. Verwendung der flammhemmenden Polymerfasern nach einem der Ansprüche 1 bis 13 für die Herstellung von textilen Geweben für den Einsatz in mobilen Verkehrsmitteln, insbesondere Flugzeugen, Zügen und Kraftfahrzeugen, oder für den Einsatz in Vorhängen, Gardinen und Sitzbezügen in öffentlichen Gebäuden wie Kinos, Theatern und Restaurants, sowie für Bekleidungs- und Schutzstoffe, für textile Bodenbespannungen, Sitzpolster und Möbelbezugsstoffe.

## Claims

1. Flame-retardant polymer fibre made of a polymer blend of polyamide 6 and polyamide 66 having a composition comprising:
I) 60 to 90% by weight of polyamide 66,
II) 6 to 28% by weight of polyamide 6,
III) 4 to 12% by weight of at least one halogen-free flame retardant made of a polycondensate of
a) at least one phosphorus-containing monomer selected from adducts of
a1) 9,10-dihydro-9-oxa-10-phosphaphenanthrene-10-oxide (DOPO) and/or nuclear-substitution DOPO derivatives in
a2) unsaturated compounds from the group of mono-and multivalent carboxylic acids and the anhydrides thereof and
b) at least one ester-forming monomer selected from the group of mono- or multivalent alcohols and mixtures thereof.

2. Flame-retardant polymer fibre according to claim 1, **characterised in that** the composition of the polymer fibre comprises at least one additive.

3. Flame-retardant polymer fibre according to one of the preceding claims having the following composition:
I) 75 to 85.99% by weight, in particular 80 to 84.9% by weight, of polyamide 66,
II) 7 to 11% by weight, in particular 7.5 to 9% by weight, of polyamide 6,
III) 7 to 10% by weight, in particular 7.5 to 9% by weight, of at least one halogen-free flame retardant of the polycondensate,
IV) 0.01 to 4% by weight, in particular 0.1 to 2% weight, of the at least one additive.

4. Flame-retardant polymer fibre according to one of the preceding claims, **characterised in that** the composition of the polymer fibre, relative to the total quantity of PA66 I), PA6 II) and flame retardant III), comprises 0.001 to 5% by weight, preferably 0.01 to 4% by weight, particularly preferred 0.1 to 2% by weight and most preferred 0.1 to 1% by weight, of the at least one additive.

5. Flame-retardant polymer fibre according to one of the preceding claims, **characterised in that** the product of the strength in cN/dtex, the square root of the elongation in % and the common logarithm of the number of cycles up to tearing of the fibre in the wire abrasion test is greater than 100 cN/dtex, preferably greater than 110 cN/dtex, particularly preferred of greater than 120 cN/dtex, even more preferred of greater than 140 cN/dtex and most preferred greater than 160 cN/dtex.

6. Flame-retardant polymer fibre according to one of the preceding claims,
**characterised in that** the polymer fibre displays an abrasion resistance in the wire abrasion test of 10,000 to 50,000 cycles, preferably of 11,000 to 50,000 and particularly preferred of 12,500 to 50,000 until tearing of the fibre.

7. Flame-retardant polymer fibre according to one of the preceding claims,
**characterised in that** the polymer fibre has a quality number of 28 to 50, preferably of 30 to 45 and particularly preferred of 34 to 45.

8. Flame-retardant polymer fibre according to one of the preceding claims,
**characterised in that** the polymer fibre has a strength in [cN/dtex] of 3.5 to 6.0, preferably of 4.0 to 5.8 and particularly preferred of 4.2 to 5.5.

9. Flame-retardant polymer fibre according to one of the preceding claims,
**characterised in that** the polymer fibre has an elongation of 20 to 120, preferably of 40 to 110 and particularly preferred of 60 to 105.

10. Flame-retardant polymer fibre according to one of the preceding claims,
**characterised in that** the fibres fulfil the flame test requirements according to FAR 25.853.

11. Flame-retardant polymer fibre according to one of the preceding claims,
**characterised in that** the polymer fibre shows increased extraction resistance, measured by means of extraction from 5 g of the polymer fibre in 150 ml deionised water, the fibre being added to a 23°C temperature-adjustable (Labomat) water bath, heated to 98°C at a heating rate of 1.5°C per minute and extracted at this temperature for 3 hours and the phosphorus content before and after the extraction differing by less than 2.5%.

12. Flame-retardant polymer fibre according to one of the preceding claims,
**characterised in that** the at least one additive is contained in a quantity such that the polymer fibre has at least one of the following properties:
- the polymer fibre fulfils the flame test requirement according to FAR 25.853
- the polymer fibre has a quality number in the range of 28 to 50.

13. Flame-retardant polymer fibre according to one of the preceding claims,
**characterised in that** the at least one additive
• a further flame retardant selected from the group of nitrogen-containing compounds, nitrogen- and phosphorus-containing compounds and mixtures hereof, and/or
• is selected from the group consisting of inorganic stabilisers, organic stabilisers, colourants and marking materials, inorganic pigments, organic pigments, IR absorbers, heat stabilisers, antistatic agents, antiblocking agents, nucleation agents, crystallisation accelerators, crystallisation inhibitors, matting agents, in particular titanium dioxide as matting agent, chain-lengthening additives, conductivity additives, carbon black, graphite, carbon nanotubes, optical brighteners, photochromic additives, crosslinking agents, intumescence agents, foreign polymers and/or mixtures thereof.

14. Textile fabric comprising flame-retardant polymer fibres according to one of the preceding claims.

15. Textile fabric according to claim 14,
**characterised in that** the fabric is a carpet, seat cover for a mobile means of transport, in particular aeroplanes, trains, motor vehicles,
or a curtain, a seat cover or a blind in public buildings, or a clothing- or protective material in textile floor coverings, seat upholstery or furniture cover materials.

16. Use of the flame-retardant polymer fibres according to one of the claims 1 to 13 for the production of textile fabrics for use in mobile means of transport, in particular aeroplanes, trains and motor vehicles, or for use in curtains, blinds and seat covers in public buildings, such as cinemas, theatres and restaurants, and also for clothing- and protective materials, for textile floor coverings, seat upholstery and furniture cover materials.

## Revendications

1. Fibre polymère retardatrice de combustion composée d'un mélange de polymères de polyamide 6 et de polyamide 66, présentant une composition comprenant :
I) de 60 à 90 % en poids de polyamide 66,
II) de 6 à 28 % en poids de polyamide 6,
III) de 4 à 12 % en poids d'au moins un agent ignifuge non halogéné composé d'un polycondensat
a) d'au moins un monomère phosphoré choisi parmi les
adduits
a1) de 10-oxyde de 9,10-dihydro-9-oxa-10-phosphaphénanthrène (DOPO) et/ou de dérivés de DOPO substitués sur le noyau,
a2) sur des composés insaturés choisis parmi le groupe comprenant les acides mono- et polycarboxyliques et leurs anhydrides, et
b) d'au moins un monomère estérifiable choisi parmi le groupe des mono- ou polyalcools, et leurs mélanges.

2. Fibre polymère retardatrice de combustion selon la revendication 1, **caractérisée en ce que** la composition de la fibre polymère contient au moins un additif.

3. Fibre polymère retardatrice de combustion selon l'une quelconque des revendications précédentes, présentant la composition suivante :
I) 75 à 85,99 % en poids, en particulier 80 à 84,9 % en poids de polyamide 66,
II) 7 à 11 % en poids, en particulier 7,5 à 9 % en poids de polyamide 6,
III) 7 à 10 % en poids, en particulier 7,5 à 9 % en poids d'au moins un agent ignifuge non halogéné du polycondensat,
IV) 0,01 à 4 % en poids, en particulier 0,1 à 2 % en poids de l'au moins un additif.

4. Fibre polymère retardatrice de combustion selon l'une quelconque des revendications précédentes, **caractérisée en ce que** la composition de la fibre polymère, rapportée à la quantité totale de PA66 I), de PA6 II) et de l'agent ignifuge III), contient de 0,001 à 5 % en poids, de préférence de 0,01 à 4 % en poids, de manière particulièrement préférée de 0,1 à 2 % en poids et de manière préférée entre toutes de 0, 1 à 1 % en poids de l'au moins un additif.

5. Fibre polymère retardatrice de combustion selon l'une quelconque des revendications précédentes, **caractérisée en ce que** le produit issu de la résistance mécanique en cN/dtex, de la racine carrée de l'allongement en pourcentage et du logarithme décimal du nombre de cycles jusqu'à la rupture de la fibre lors de l'essai d'usure par frottement au fil, est supérieur à 100 cN/dtex, de préférence supérieur à 110 cN/dtex, de manière particulièrement préférée supérieur à 120 cN/dtex, de manière davantage préférée supérieur à 140 cN/dtex et d'une manière préférée entre toutes supérieur à 160 cN/dtex.

6. Fibre polymère retardatrice de combustion selon l'une quelconque des revendications précédentes, **caractérisée en ce que** la fibre polymère présente une résistance à l'abrasion, lors de l'essai d'usure par frottement au fil, de 10 000 à 50 000 cycles, de préférence de 11 000 à 50 000 et de manière particulièrement préférée de 12 500 à 50 000 jusqu'à la rupture de la fibre.

7. Fibre polymère retardatrice de combustion selon l'une quelconque des revendications précédentes, **caractérisée en ce que** la fibre polymère présente un indice de qualité allant de 28 à 50, de préférence de 30 à 45 et de manière particulièrement préférée de 34 à 45.

8. Fibre polymère retardatrice de combustion selon l'une quelconque des revendications précédentes, **caractérisée en ce que** la fibre polymère présente une résistance mécanique en [cN/dtex] de 3,5 à 6,0, de préférence de 4,0 à 5,8 et de manière particulièrement préférée de 4,2 à 5,5.

9. Fibre polymère retardatrice de combustion selon l'une quelconque des revendications précédentes, **caractérisée en ce que** la fibre polymère présente un allongement de 20 à 120, de préférence de 40 à 110 et de manière particulièrement préférée de 60 à 105.

10. Fibre polymère retardatrice de combustion selon l'une quelconque des revendications précédentes, **caractérisée en ce que** les fibres satisfont aux conditions de l'essai d'inflammabilité selon la FAR 25.853.

11. Fibre polymère retardatrice de combustion selon l'une quelconque des revendications précédentes, **caractérisée en ce que** la fibre polymère présente une résistance accrue à l'extraction, mesurée par l'extraction de 5 g de la fibre polymère dans 150 ml d'eau désionisée, la fibre étant introduite dans un bain-marie chaud à 23 °C pouvant être tempéré (Labomat), et étant chauffée à 98 °C à une vitesse de montée en température de 1,5 °C par minute, et étant extrait pendant 3 heures à cette température, la teneur en phosphore avant l'extraction différant de moins de 2,5 % de la teneur en phosphore après l'extraction.

12. Fibre polymère retardatrice de combustion selon l'une quelconque des revendications précédentes, **caractérisée en ce que** l'au moins un additif est présent en une quantité telle que la fibre polymère présente au moins l'une des propriétés suivantes :
- la fibre polymère satisfait aux conditions de l'essai d'inflammabilité selon la FAR 25.853,
- la fibre polymère présente un indice de qualité situé dans la plage allant de 28 à 50.

13. Fibre polymère retardatrice de combustion selon l'une quelconque des revendications précédentes, **caractérisée en ce que** l'au moins un additif
• est un agent ignifuge supplémentaire choisi parmi le groupe des composés azotés, des composés azotés et phosphorés et leurs mélanges, et/ou
• est choisi parmi le groupe comprenant les stabilisants inorganiques, les stabilisants organiques, les colorants et les substances de marquage, les pigments inorganiques, les pigments organiques, les absorbeurs d'IR, les thermostabilisants, les antistatiques, les agents anti-adhérence de contact, les agents de nucléation, les accélérateurs de cristallisation, les retardateurs de cristallisation, les agents de matité, en particulier le dioxyde de titane en tant qu'agent de matité, les additifs prolongateurs de chaîne, les additifs de conductibilité, le noir de carbone, le graphite, les nanotubes de carbone, les azurants optiques, les additifs photochromes, les agents de réticulation, les agents intumescents, les polymères étrangers et/ou leurs mélanges.

14. Tissu textile contenant des fibres polymères retardatrices de combustion selon l'une quelconque des revendications précédentes.

15. Tissu textile selon la revendication 14, **caractérisé en ce que** le tissu est un tapis, une housse de siège pour un moyen de transport mobile, en particulier des avions, des trains, des véhicules automobiles, ou un rideau, un revêtement de siège ou un store dans les bâtiments publics, ou un produit de revêtement ou de protection dans les revêtements de sol textiles, les rembourrages de siège ou les tissus d'ameublement.

16. Utilisation des fibres polymères retardatrices de combustion selon l'une quelconque des revendications 1 à 13 pour la fabrication de tissus textiles destinés à être utilisés dans des moyens de transport mobiles, en particulier des avions, des trains et des véhicules automobiles, ou pour une utilisation dans des rideaux, des stores et des revêtements de siège dans les bâtiments publics tels que les cinémas, les théâtres et les restaurants, ainsi que pour des produits de revêtement et de protection, pour des revêtements de sol textiles, des rembourrages de siège et des tissus d'ameublement.
